# EUROPEAN PATENT APPLICATION

(11) **EP 3 923 649 A1**
(43) Date of publication of application: **15.12.2021**
(21) Application number: 19914308.2
(22) Date of filing: 08.02.2019
(51) Int. Cl.: H04W 72/04, H04W 16/26

(54) **WIRELESS NODE AND WIRELESS COMMUNICATION CONTROL METHOD**

(71) Applicant: NTT DOCOMO, INC., Chiyoda-Ku Tokyo 100-6150 (JP)
(72) Inventor: HARADA, Hiroki, Tokyo 100-6150 (JP); TAKEDA, Kazuaki, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/004761
(87) International publication number: WO 2020/161922

(57) **Abstract**

A wireless node includes: a reception section that receives configuration information including a configuration on a resource of a first radio period and a resource of a second radio period, and indication information indicating an application of the resources; and a control section that controls a link direction of the resource of the first radio period, and use of the resource of the second radio period, based on the configuration information and the indication information.

## Description

### Technical Field

The present disclosure relates to a wireless node and a wireless communication control method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

For future wireless communication systems (e.g., 5G), a technique of Integrated Access and Backhaul (IAB) that unifies an access link and a Backhaul (BH) link is considered (Non-Patent Literature (hereinafter referred to as "NPL") 1). An IAB node, which is an example of a wireless node, forms a wireless access link with a User Equipment (UE), and also forms a wireless BH link with another IAB node and/or a wireless base station.

### Citation List

### Non-Patent Literature

NPL 1 3GPP TR 38.874 V16.0.0 "3rd Generation Partnership Project; Technical Specification Group Radio Access Network; NR; Study on Integrated Access and Backhaul (Release 16)," December 2018

### Summary of Invention

### Technical Problem

However, no comprehensive study has been conducted for resource control in BH links and/or access links of wireless nodes.

One object of one aspect of the present disclosure is to provide a wireless node and a wireless communication control method each appropriately controlling resources in BH links.

### Solution to Problem

A wireless node according to one aspect of the present disclosure includes: a reception section that receives configuration information including a configuration on a resource of a first radio period and a resource of a second radio period, and indication information indicating an application of the resources; and a control section that controls a link direction of the resource of the first radio period, a link direction of the resource of the second radio period, and use of the resource of the second radio period, based on the configuration information and the indication information.

### Advantageous Effects of Invention

According to the present disclosure, it is possible to appropriately control resources in BH links and/or access links.

### Brief Description of Drawings

FIG. 1 illustrates a configuration example of a wireless communication system according to the present disclosure;
FIG. 2 illustrates a configuration example of IAB nodes according to the present disclosure;
FIG. 3A illustrates a first example of a slot format according to Embodiment 1;
FIG. 3B illustrates a second example of a slot format according to Embodiment 1;
FIG. 4A illustrates a third example of a slot format according to Embodiment 1;
FIG. 4B illustrates a fourth example of a slot format according to Embodiment 1;
FIG. 5A illustrates a fifth example of a slot format according to Embodiment 1;
FIG. 5B illustrates a sixth example of a slot format according to Embodiment 1;
FIG. 5C illustrates a seventh example of a slot format according to Embodiment 1;
FIG. 6 illustrates an example of a parameter "slotFormatCombinationId" according to Embodiment 1;
FIG. 7A illustrates a first example of a symbol group of a slot format according to Embodiment 1;
FIG. 7B illustrates a second example of a symbol group of a slot format according to Embodiment 1;
FIG. 7C illustrates a third example of a symbol group of a slot format according to Embodiment 1;
FIG. 8 is a diagram for describing an example of Proposal 3-2 according to Embodiment 1;
FIG. 9 is a diagram for describing an example of Proposal 4 according to Embodiment 1;
FIG. 10 is a diagram for describing an example of Proposal 5 according to Embodiment 2;
FIG. 11A illustrates a first example of Information Element (IE) "SlotFormatIndicator" in Proposal 5-1 according to Embodiment 2;
FIG. 11B illustrates a second example of IE "SlotFormatIndicator" in Proposal 5-1 according to Embodiment 2;
FIG. 12A illustrates an example of IE "SlotFormatIndicator" in Proposal 5-2 according to Embodiment 2;
FIG. 12B illustrates an example of IE "SlotFormatCombinationsPerCell" in Proposal 5-2 according to Embodiment 2;
FIG. 13 is a diagram for describing an example of an indication of Case 2 according to Embodiment 2;
FIG. 14 is a diagram for describing an example of joint indications of Cases 2 and 3 according to Embodiment 2;
FIG. 15 is a diagram for describing an example of joint indications of Cases 1, 2 and 3 according to Embodiment 2; and
FIG. 16 illustrates an example of a hardware configuration of an IAB node and a user equipment according to the present disclosure.

### Description of Embodiments

Hereinafter, an embodiment of the present disclosure will be described with reference to the accompanying drawings.

### (Embodiment 1)

Hereinafter, Embodiment 1 will be described.

### <System Configuration>

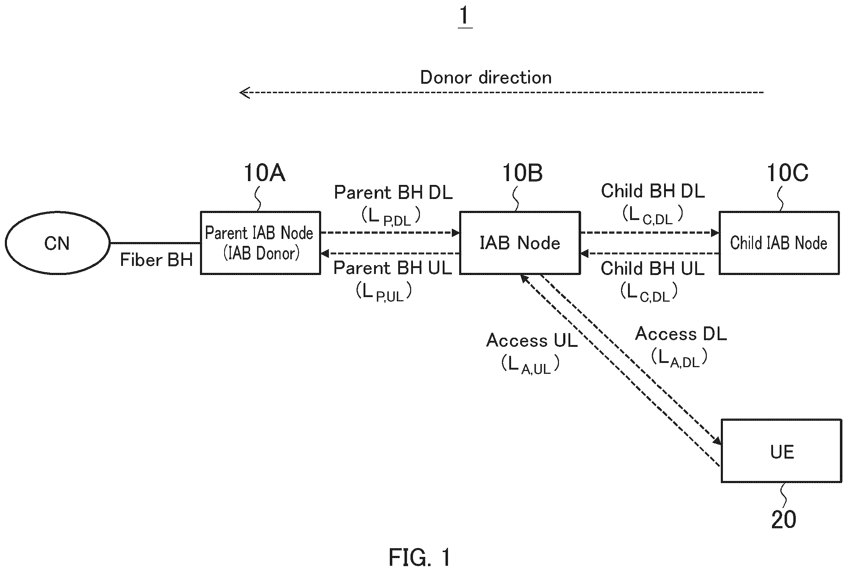

FIG. 1 illustrates a configuration example of a wireless communication system.

Wireless communication system 1 includes a plurality of IAB nodes 10A to 10C as one example of wireless nodes, and UE 20 as one example of user equipment. Hereinafter, like in "IAB nodes 10," only the common numeral of the reference signs may be used to describe IAB nodes 10A to 10C without distinguishing them from one another.

IAB nodes 10A to 10C are interconnected to one another by wireless communication. IAB node 10B is connected to IAB node 10A and to IAB node 10C as illustrated in FIG. 1. IAB node 10A located upstream as seen from IAB node 10B is called a parent IAB node, and IAB node 10C located downstream as seen from IAB node 10B is called a child IAB node. The downstream, herein, is a direction away from the IAB donor, and the upstream is the direction nearer the IAB donor.

Each of IAB nodes 10A to 10C forms a cell, which is an area in which the IAB node is able to communicate wirelessly. That is, IAB nodes 10 have a function as a base station. UE 20 in the cell is able to wirelessly connect to IAB node 10 forming the cell.

In a case where, IAB node 10A is an IAB donor, IAB node 10A is connected to a Core Network (CN) through a Fiber Backhaul (BH). Note that the number of IAB nodes 10 and the number of UEs 20 nodes to be included in wireless communication system 1 are not limited to the example in FIG. 1.

Note that, "L" with its subscripts shown in FIG. 1 denote the following:
- "LP,DL" denotes a Downlink (DL) from parent IAB node 10A to IAB node 10B;
- "LP,UL" denotes an Uplink (UL) from IAB node 10B to parent IAB node 10A;
- "LC,DL" denotes the DL from IAB node 10B to child IAB node 10C;
- "LC,UL" denotes the UL from child IAB node 10C to IAB node 10B;
- "LA,DL" denotes the DL from IAB node 10B to UE 20; and
- "LA,UL" denotes the UL from UE 20 to IAB node 10B.

LA,DL and/or LA,UL are referred to as access links. LP,DL LP,UL LC,DL and/or LC,UL are referred to as BH-links.

### <IAB Node>

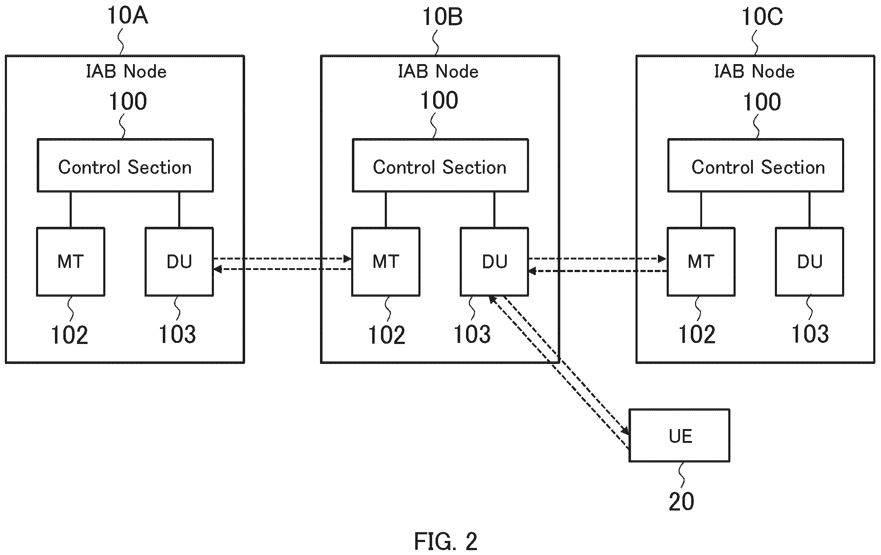

FIG. 2 illustrates a configuration example of IAB node 10.

As illustrated in FIG. 2, each of IAB nodes 10 includes control section 100, Mobile Termination (MT) 102, and Distributed Unit (DU) 103. MT 102 and DU 103 may be functional blocks. Hereinafter, a function of MT 102 may be expressed as MT without the reference sign, and for DU 103, a function of DU 103 may be expressed as DU without the reference sign. DU 103 may have functions corresponding to those of a base station. In addition, DU 103 may have a function corresponding to an extension station in a base station including the extension station that performs processing of a radio portion and an aggregation station that performs processing other than the radio portion. An example of MT 102 may include a function corresponding to a terminal.

MT 102 of IAB node 10B controls a BH-link (hereinafter referred to as a "parent link") with parent IAB node 10A. DU 103 of IAB node 10B controls a BH-link with child IAB node 10C and/or an access link with UE 20. Hereinafter, the BH link with the child IAB node 10C and/or access link with UE20 is referred to as a "child link".

Control section 100 controls MT 102 and DU 103. An operation of IAB node 10 to be described, hereinafter, may be implemented by control of MT 102 and DU 103 by this control section 100. Control section 100 may also be provided with a storage section for storing therein a variety of information.

A half duplex constraint may be applied between the parent link and the child link. To implement half duplex constraint, Time Division Multiplexing (TDM) may be applied to the parent link and the child link. In this case, the time resource may be available to either the parent BH link or the child BH link. Application of TDM is only exemplary, and for example, Frequency Division Multiplexing (FDM) or Space Division Multiplexing (SDM) may be applied.

The temporal resources in the parent-link (hereinafter referred to as "MT-resources") are configured with one of the following types.
M T resources configured with DL type (hereinafter referred to as "MT-D") are used as LP, DL.
M T resources configured with UL type (hereinafter referred to as "MT-U) are used as a LP, UL.
M T resources configured with Flexible (FL) type (hereinafter referred to as "MT-F") are used as LP, DL or LP, UL.

The MT resources may be replaced with another term, such as a resource used for communication with parent IAB node 10A, a resource used for communication with a backhaul link with parent IAB node 10A or a resource used for communication with a serving cell. The MT resource may be an example of a resource of a first radio period.

The time resource in the child link (hereinafter referred to as "DU resource") is configured with one of the following types.
D U resources configured with DL type (hereinafter referred to as "DU-D") may be used as a LC, DL or a LA, DL.
D U resources configured with UL type (hereinafter referred to as "DU-U") may be used as LC, UL or LA, UL.
D U resources configured with FL type (hereinafter referred to as "DU-F") may be used as a LC, DL, LC, UL, LA, DL or a LA, UL.
D U resources configured with Not-Available (NA) type (hereinafter referred to as "DU-NA") are not used for child links.

The DU resource may be replaced with another term, such as a resource used for communication with child IAB node 10C and/or UE 20, a resource used for communication with a backhaul link with child IAB node 10C and/or a resource used for communication with access link with UE 20. The DU resource may be an exemplary resource of a second radio period.

In addition, DU-D, DU-U and DU-F may be configured with any of the following types:
D U resource configured with Hard type is used for a child link and is not used for a parent link. Hereinafter, the DU resource configured with Hard type may be referred to as "DU(H). "
D U resource configured with Soft type is determined by an explicit and/or implicit indication from parent IAB node 10A as to whether or not the DU resource is available for a child link (hereinafter referred to as "Availability"). Hereinafter, the DU resource configured with Soft type may be referred to as "DU(S)."

Note that, DL resources may be configured with DL, FL, FL and NA, as well as Soft and Hard, semi-statically (semi-static). For example, the configurations for DU may be performed by a RRC parameter. The term "RRC" is an abbreviation for Radio Resource Control. Note that the RRC parameter may be replaced with another term, such as RRC signaling, a RRC message, or a RRC configuration. Further, the configurations for DU may also be performed by an F1-AP parameter. Note that the F1-AP parameter may be replaced with another term, such as F1-AP signaling or an F1-AP message.

### <Study>

A case where the availability of DU(S) is indicated dynamically will be discussed. In this case, the following are assumed.
▪ The link-direction (i.e., DL or UL) of DU resources may be configured semi-statically.
▪ The link direction of DU-F may be determined by IAB node 10. This determination is not limited to an indication from a parent IAB node.
▪ When DU(S) is available, an assumption can be made that this resource has been released from a parent link. The availability of DU(S) may be determined by a parent IAB node.

It is also possible to dynamically configure a slot, using the parameter "DCI format 2_0 " for indicating a slot format. The term "DCI" is an abbreviation for Downlink Control Information. For example, a slot format pattern may be dynamically indicated by slot format indication information (Slot format indicator) in DCI format 2_0. The slot format indication information is information for indicating a slot format pattern. Note that the slot is a schedule unit of data and may be composed of a plurality of symbols (e.g., 14 symbols). Each symbol of slots can be used as UL, DL, FL, or NA. Therefore, it can be said that the slot format indication information is information for designating how each symbol of a slot is used.

Further, the availability of DU(S) may be dynamically indicated by Layer 1 (L1) signaling. This L1 signaling may be an extension of existing L1 signaling or new L1 signaling.

Under the assumptions above, Cases 1 and 2 below are assumed.
(Case 1) The availability of DU(S) and MT-F link direction are indicated.
(Case 2) The availability of DU(S) is indicated.

In consideration of Cases 1 and 2 described above, the dynamic indication of the availability of DU(S) may be implemented by at least one of Option 1 and Option 2 below.

### (Option 1)

The link direction of an MT resource and the availability of a DU resource are jointly indicated (joint indication). "Joint indication" may be replaced with another term, such as "collective indication," "together indication," "indication at once," or "combined indication." This Option 1 may be implemented by at least one of Option 1-1 or 1-2 below.
(Option 1-1) The joint indication uses DCI format 2_0 and the reserved entries (e.g., 56 to 254) of the slot format table.
(Option 1-2) Instead of an index indication in the slot format table, information indicating one of MT-D, MT-U, MT-F or DU-A (e.g., 2-bit information) is used for the joint indication. Note that the DU resource on which DU-A is indicated is configured to be available.

### (Option 2)

The link direction of an MT resource and the availability of a DU resource are indicated, separately. For example, the link direction of an MT resource is indicated in DCI format 2_0, and the availability of the DU resource is indicated by new signaling. The new signaling may include a bitmap for the indication.

Hereinafter, Option 1-1, Option 1-2, and Option 2 will be described in detail.

### <Details of Option 1-1>

Option 1-1 uses DCI format 2_0 and the reserved entries (e.g., 56 to 254) in the slot format table to jointly indicate the link direction of an MT resource and the availability of a DU resource.

For example, MT-D, ML-U or MT-F and the availability (i.e., DU-A) of DU(S) are jointly indicated. For example, each slot format indicates a slot format formed by MT-D, MT-U, MT-F and DU-A. Option 1-1 is less susceptible to modifications in specification for future radio communication systems (e.g., 5G) and does not cause an increase in communication overhead.

Option 1-1 may be implemented by at least one of Proposal 1-1 and Proposal 1-2 below.

### (Proposal 1-1)

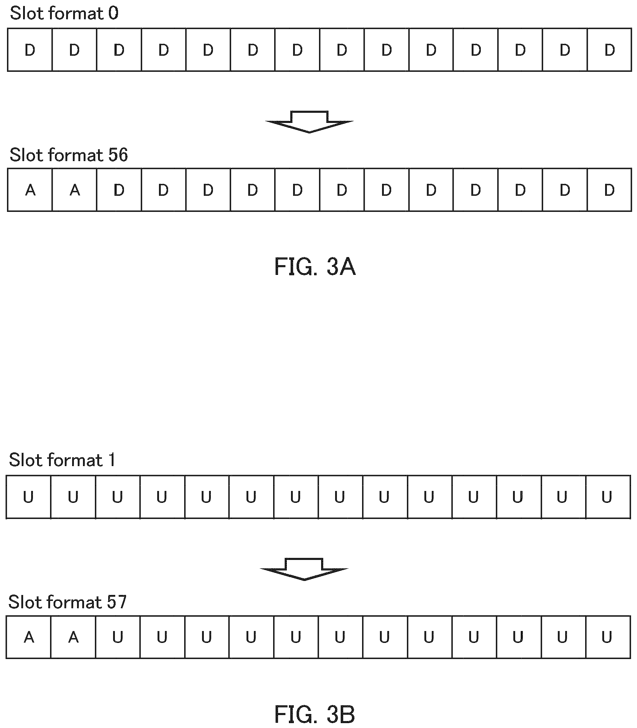

A new slot format is supported in which some symbols in the existing slot format as a reference are replaced with "DU-As." For example, as shown in FIG. 3A, slot format 56 is supported in which two symbols from the very first symbol in slot format 0 including all symbols configured with MT-D are replaced with DU-As. For example, as shown in FIG. 3B, slot format 57 is supported in which two symbols from the very first symbol of slot format 1 including all symbols configured with MT-U are replaced with DU-As.

### (Proposal 1-2)

Several slot format patterns configured with DU-As are supported. For example, at least one of the following slot formats (Proposal 1-2-1), (Proposal 1-2-2), and (Proposal 1-2-3) is supported.

### (Proposal 1-2-1)

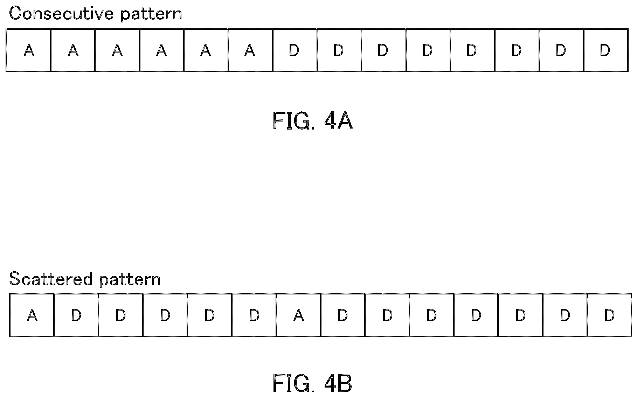

As shown in FIG. 4A, a slot format pattern configured with consecutive DU-As and a slot format pattern configured with interspersed DU-As as shown in FIG. 4B are supported.

### (Proposal 1-2-2)

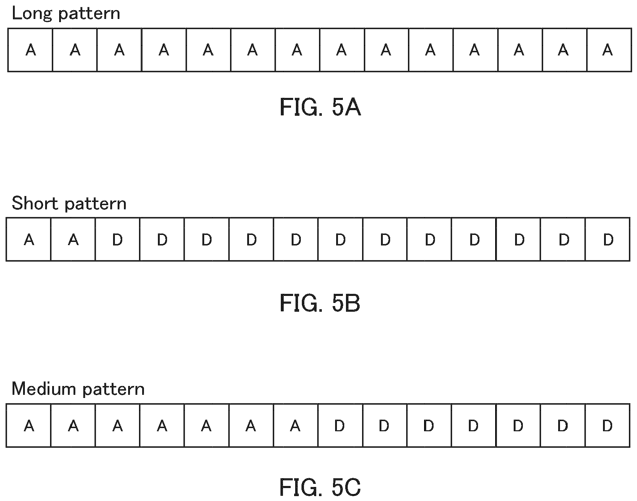

Several slot format patterns configured with a predetermined number of DU-As are supported. For example, as shown in FIG. 5A, a long slot format pattern configured with a relatively large number (e.g., 14 symbols) of DU-As is supported. Also, as shown in FIG. 5B, a short slot format pattern configured with a relatively small number (e.g., 2 symbols) of DU-As is supported. In addition, as shown in FIG. 5C, a medium slot format pattern configured with a middle number of DU-As between the long and short slot format patterns (e.g., 7 symbols) is supported.

### (Proposal 1-2-3)

Some slot format patterns configured with a DU-A at a predetermined position are supported. For example, a slot format pattern configured with a DU-A from the first, the seventh or the tenth symbol is supported.

The number of reserved entries in the slot format table is limited. Therefore, in Proposal 1-1 and Proposal 1-2 described above, it is not true that all patterns of the link direction of an MT resource and the availability of a DU resource in slots are supportable. In this respect, for example, at least one of the following constraints (A1) to (A3) may be provided.

### (A1)

The number of DU-As may be limited. The number of DU-As may be limited such that various types of traffic loads are supportable in consideration of the limitations on the number of reserved entries.

### (A2)

The position of a DU-A may be limited based on the constraint of (A1) above. The traffic start position in slots (e.g., the first or the second symbol) is less important than the total available resources. In the frame configuration of the existing slot format, there are many patterns in which DL resources are consecutive initially and UL resources are consecutive finally. In this respect, when the DL resources of the parent link are released, a pattern in which the first symbol is the DU-A start position may be used. Further, when the UL resources of the parent link are released, a pattern in which the tenth symbol is the DU-A start position may be used.

### (A3)

A pattern of interspersed DU-As and a pattern of consecutive DU-As may be supported based on the constraint of (A1) described above. In the frame structure of the existing slot format, there are many cases in which DLs are consecutive initially and ULs are consecutive finally. In this respect, when the consecutive DL or UL resources of the parent link are released, a pattern of consecutive DU-As may be used. Further, when both DL and UL resources are released from the parent link, a pattern of interspersed DU-As may be used.

### <Details of Options 1-2>

Instead of an index indication in the slot format table, information (e.g., 2-bit information) for indicating one of MT-D, MT-U, MT-F or DU-A is used to jointly indicate the link direction of an MT resource and the availability of a DU resource.

For example, MT-D is indicated by 2-bit information "00," MT-U is indicated by 2-bit information "01," MT-F is indicated by 2-bit information "10," and DU-A is indicated by 2-bit information "11."

This 2-bit information allows joint indication of MT-D, MT-U or MT-F and DU-A as in Option 1-1. Unlike Option 1-1, Option 1-2 need not use a slot format table.
Option 1-1 has a limited number of reserved entries of a slot format, but Option 1-2 has no such limitation. Therefore, Option 1-2 makes it possible to flexibly configure resource use patterns, compared with Option 1-1.
Option 1-2 may be implemented by at least one of Proposal 2-1 and Proposal 2-2 below.

### (Proposal 2-1)

IE "slotFormatCombinationsPerCell" for indicating a combination of slot formats for each cell and DCI format 2_0 are used.

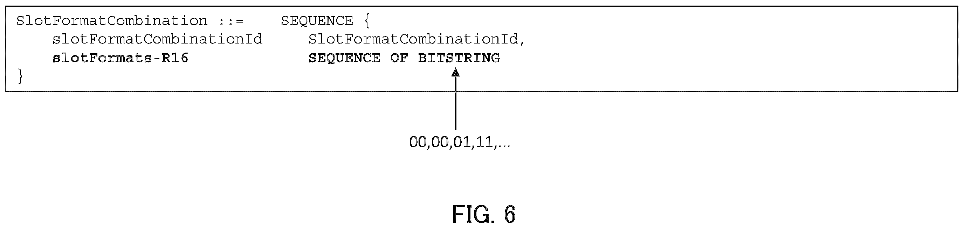

For example, as shown in FIG. 6, instead of an index of the slot format table, a parameter "slotFormatCombinationId" for indicating a combination of slot formats is associated with new information "slotFormats-R16" relating to the slot format. The information "slotFormats-R16" is information for indicating the link direction of an MT resource and the availability of a DU resource in slots. For example, when 2-bit information is associated with each of 14 symbols in one slot and a pattern is made configurable most flexibly, the information "slotFormats-R16" may have a 28-bit parameter. In this case, the existing slot format table may not be used. Note that "R16" of the information "slotFormats-R16" is an example indicating new information, and the name of this information is not limited to this.

In order to reduce overhead, (Alt. B1) or (Alt. B2) below may be applied instead of the 28-bit parameter.
(Alt. B1) The method of Proposal 3 to be described hereinafter is applied.
(Alt. B2) A new slot format table larger in size than the existing slot format table is defined.

Note that DCI format 2_0 may indicate the parameter "slotFormatCombinationId" associated with the information "slotFormats-R16."

### (Proposal 2-2)

Instead of the parameter "slotFormatCombinationId," a new DCI format x for directly indicating a slot configuration is defined. Note that "x" may be a number for identifying the new DCI format. IAB node 10 then configures a slot based on the new slot format indication information (slot format indicator_x) for indicating a slot format pattern included in the DCI format x. Note that "x" in "slot format indicator_x" is an example indicating that the information is new slot format indication information, and the name of slot format indication information is not limited to this example. The slot format indication information indicates a slot format pattern. For example, 2-bit information for indicating a resource-type is associated with each of 14 symbols in one slot, and each slot format indication information indicates a 28-bit sequence of a mutually different pattern. This makes it possible to flexibly configure a slot format pattern by the slot format indication information.

In this case, IAB node 10 may monitor the DCI format x instead of the DCI format 2_0. The slot format indication information may be capable of providing an indication to one or more slots. Further, the RRC parameter may configure X-RNTI, the payload size of DCI format x, and/or the information for each cell (e.g., cell ID and/or bit location). The term "RNTI" is an abbreviation for Radio Network Temporary Identifier.

In order to reduce overhead in Proposal 2-1 and Proposal 2-2 above, at least one of Proposal 3-1 and Proposal 3-2 below may be applied.

### (Proposal 3-1)

Symbol groups are configured.

For example, consecutive symbols that share the same configuration in MT-D, MT-U, MT-F, and DU-A are referred to as a symbol group. Note that symbol groups may be configured by higher layer signaling. Further, a specific or common symbol group may be configured in a cell.

Symbol groups may be configured, for example, by at least one of Proposal 3-1-1 and Proposal 3-1-2 below.

### (Proposal 3-1-1)

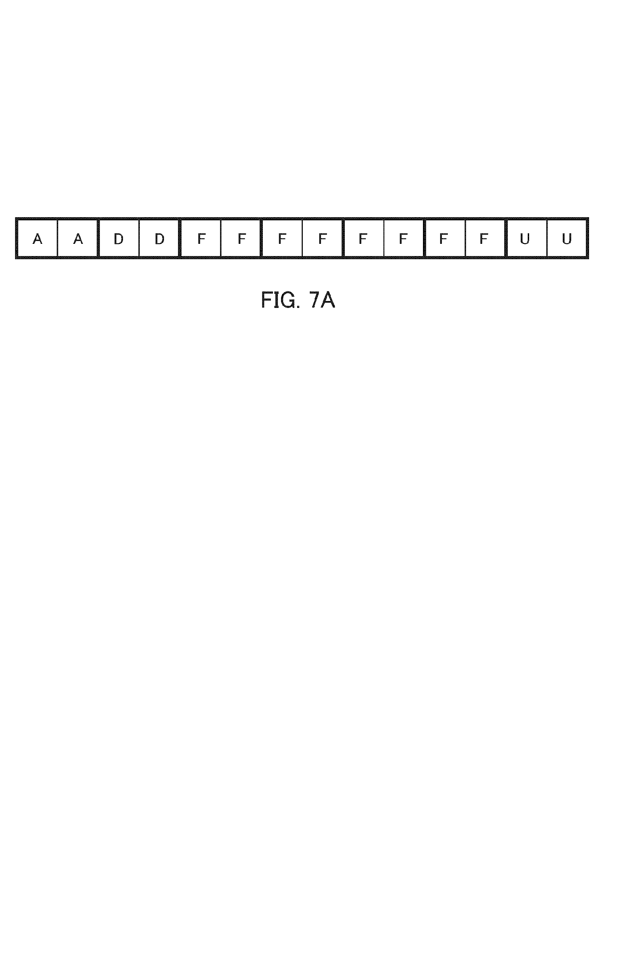

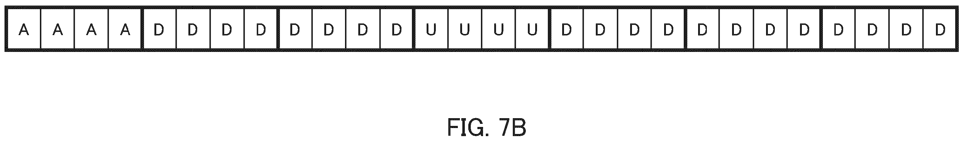

A certain symbol group pattern is configured. For example, a symbol group pattern in which the number of symbols of each group is the same is configured. In this case, the number of symbols and the number of slots may be configured by the RRC parameter. For example, when the number of symbols "2" and the number of slots "1" are configured, a symbol group pattern shown in FIG. 7A may be configured. In FIG. 7A, one thick frame indicates one symbol group. For example, when the number of symbols "4" and the number of slots "2" are configured, a symbol group pattern shown in FIG. 7B may be configured. In FIG. 7B, one thick frame indicates one symbol group.

### (Proposal 3-1-2)

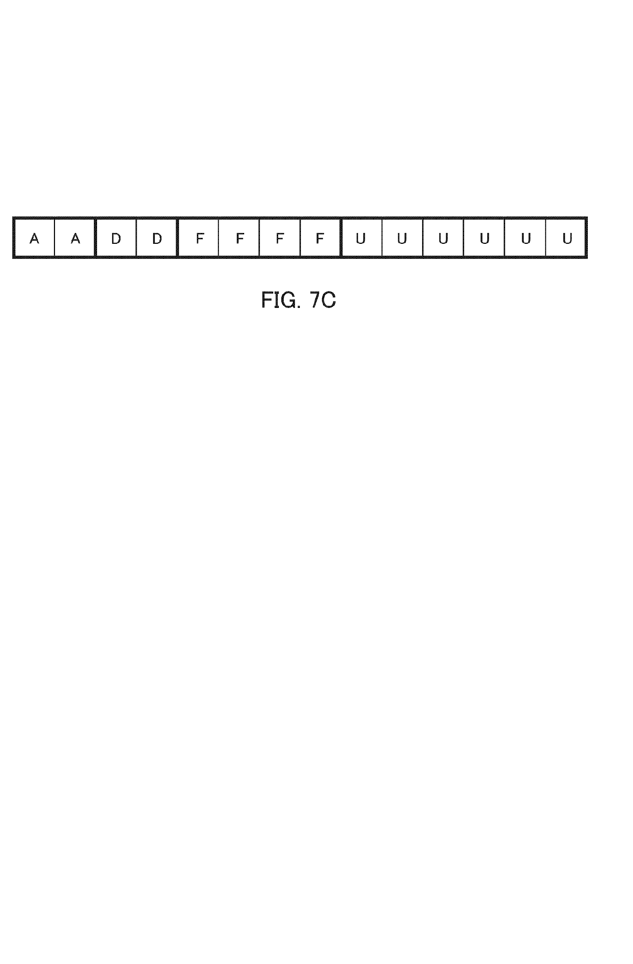

An optional symbol group pattern is configured. In this case, the number of consecutive symbols and the number of slots may be configured by the RRC parameter. For example, when the consecutive number of symbols [2, 2, 4, 6] and the number of slots "1" are configured, a symbol group pattern shown in FIG. 7C may be configured. In FIG. 7C, one thick frame indicates one symbol group.

### (Proposal 3-2)

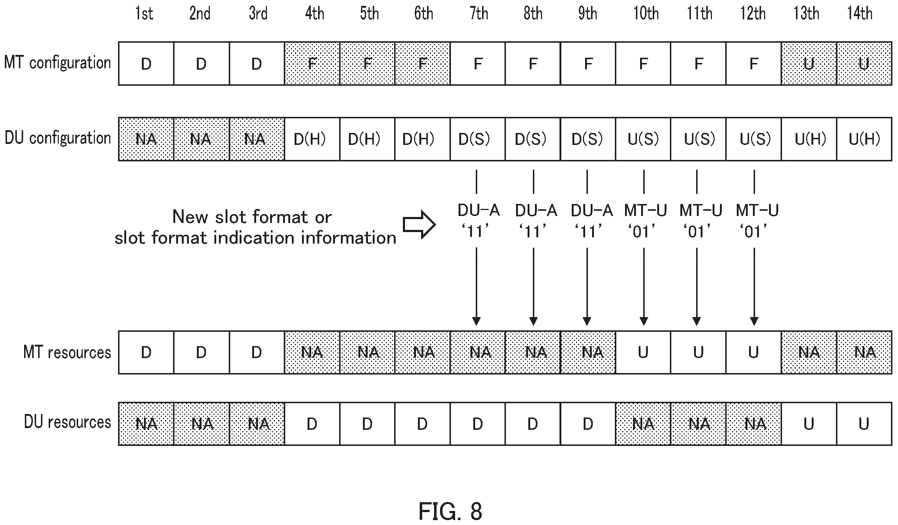

The link direction of an MT resource and the availability of a DU resource are jointly indicated dynamically for MT-F and DU(S). FIG. 8 illustrates an example in which the link direction of an MT resource and the availability of a DU resource are jointly indicated dynamically for MT-F and DU(S) of the seventh to the twelfth symbols.

In this dynamic joint indication, the new format information (slotFormats-R16) as described in Proposal 2-1 above or the new slot format indication information (slot format indicator x) described in Proposal 2-2 above may be used. The payload size of this format information or the slot format indication information may be determined according to a pattern of MT-F and the DU(S). For example, as shown in FIG. 8, when 2 bit "11" indicating a DU-A is jointly indicated dynamically, an MT resource of MT-F may be configured with NA, and a DU resource of DU-D(S) may be configured with DU-D. Further, when 2 bits "01" indicating an MT-U is jointly indicated dynamically, an MT resource of MT-F may be configured with an MT-U, and a DU resource of DU-U(S) may be configured with NA.

Note that this Proposal 3-2 is based on the following reasons.
▪ MT-F and DU(S) require a dynamic indication for a use method.
▪ An MT resource that overlaps DU(H) is not available.

### <Details of Option 2>

The link direction of an MT resource and the availability of a DU resource are indicated, separately. For example, DCI format 2_0 is used to indicate an MT resource, and new signaling is used to indicate the availability of a DU resource. The new signaling may have, for example, a bitmap in which each bit indicates the IA or INA of a symbol configured as Soft. The term "IA" herein means that it is explicitly or implicitly indicated that DU resources are available. The term "INA" means that it is explicitly or implicitly indicated that DU resources are unavailable.

According to Option 2, a flexible indication is made possible. In Option 2, configurations of an MT resource and a DU resource are separated, and the availability is indicated for a resource of Soft. Thus, when the MT resource does not require dynamic indication, the overhead is reduced with Option 2 than with Option 1.

Option 2 may be implemented by Proposal 4 below.

### (Proposal 4)

New DCI format y for indicating the availability of DU(S) is defined. Note that "y" may be a number for identifying the new DCI format. IAB node 10 may configure the availability of DU(S) based on the new availability indication information (availability indicator) for indicating the availability of DU(S) included in DCI format y. The availability indication information may take values from 1 to N (where N is the maximum number of serving cells), for example. The availability indication information 1-N may correspond to a bitmap of a mutually different pattern. Each bit of a bitmap may indicate IA or INA of a symbol configured as Soft.

One availability indication information may be associated with one serving cell. Further, one availability indication information may be capable of indicating the availability of a resource (e.g., symbol) configured as Soft of one or more slots.

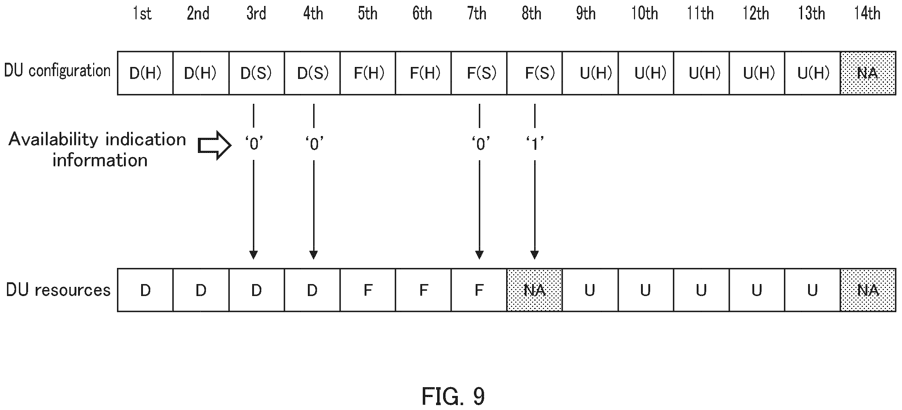

As shown in FIG. 9, the availability indication information in DCI format y indicates bit "0" or "1" for the third, the fourth, the seventh, and the eighth symbols configured as Soft in one slot which has been semi-statically configured. In FIG. 9, bit "0" indicates IA and bit "1" indicates INA. As a result, the symbols of the third and the fourth DU-D(S) are configured with DU-D. The seventh symbol of DU-F(S) is configured with DU-F. The eighth symbol of DU-F(S) is configured with NA.

The RRC parameter may indicate an RNTI, information for each cell (e.g., cell ID and/or bit position) and/or the payload size of the availability indication information.

Alt. C1 or Alt. C2 below may be applied to configuration and determination of the payload size of the availability indication information.
(Alt. C1) The payload size is configured and determined by the RRC parameter. Either Alt. C1-1 or Alt. CI-2 may be applied in this case.
(Alt. C1-1) The number of slots is configured by the RRC parameter, and IAB node 10 determines the payload size according to the configuration of Soft resources.
(Alt. C1-2) The payload size is directly configured by the RRC parameter.
(Alt. C2) The default number of slots (e.g., 1) is defined, and IAB-node 10 determines the payload size according to the configuration.

In Proposal 4 described above, the configuration of a symbol group of Proposal 3 described above may be used.

### <Summary of Embodiment 1>

In Embodiment 1, IAB node 10 includes: a reception section that receives configuration information including a configuration on an MT resource of a parent link and a DU resource of a child link and indication information indicating an application of the resources; and control section 100 that controls a link direction of the MT resource and use of the DU resource based on the configuration information and the indication information.

With this configuration, IAB node 10 can appropriately control an MT resource and a DU resource.

### (Embodiment 2)

Hereinafter, Embodiment 2 will be described. Note that, since the configurations of the radio system and IAB node 10 according to Embodiment 2 have been already described in Embodiment 1, the description thereof is omitted.

### <Study>

A case where both the availability of DU(S) and the link direction of an FL resource are dynamically indicated will be discussed. In this case, Cases 1, 2 and 3 below are assumed.
- (Case 1): The link direction of an MT-F is dynamically indicated.
- (Case 2): The link direction of a DU-F is dynamically indicated.
- (Case 3): The availability of a DU(S) is dynamically indicated.

In consideration of Cases 1, 2, and 3 described above, the dynamic indication may be implemented by at least one of Options 1, 2, and 3 below.
(Option 1) Indications of Cases 1, 2, and 3 are separated.
(Option 2) Indication of one of Cases 1, 2, and 3 is separated from the joint indication of the other two cases. This Option 2 may be implemented by at least one of Option 2-1, Option 2-2, and Option 2-3 below.
(Option 2-1) Indication in Case 1 and joint indication in Cases 2 and 3 are separated.
(Option 2-2) Indication in Case 2 and joint indication in Cases 1 and 3 are separated.
(Option 2-3) Indication in Case 3 and joint indication in Cases 1 and 2 are separated.
(Option 3) Cases 1, 2, and 3 are jointly indicated.

Hereinafter, Option 1, Option 2-1, Option 2-2, Option 2-3, and Option 3 will be described in detail.

### <Details of Option 1>

### (Proposal 5)

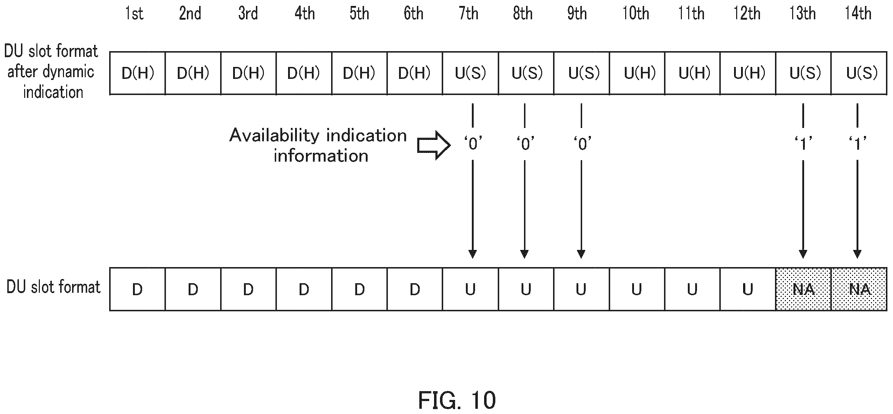

In Option 1, the indications of Cases 1, 2, and 3 are separated. For example, in Case 1, an indication is made using an existing mechanism (e.g., DCI format 2_0). In Case 2, the link direction of a DU-F is indicated using DCI format 2_0 and the slot format table after semi-static configuration. Note that the indication of Case 2 will be described hereinafter in detail. In Case 3, the indication is made using Proposal 4 of Embodiment 1. For example, as shown in FIG. 10, the availability of DU(S) is configured using the availability indication information described in Proposal 4 for DU(S) in the DU slot format after the dynamic indication.

### «Details of Indications of Case 2»

Next, the indication of Case 2 will be described in detail. The indication of Case 2 may be implemented by Proposal 5-1 and/or Proposal 5-2 below.

### (Proposal 5-1)

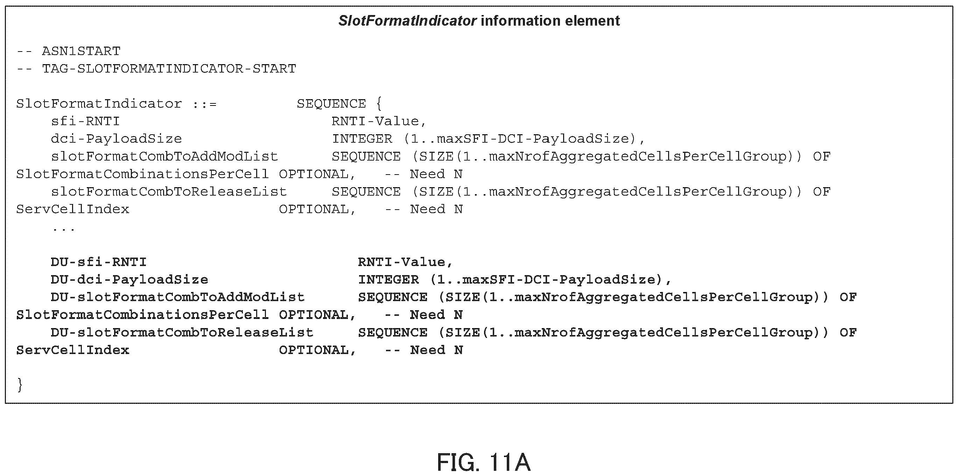

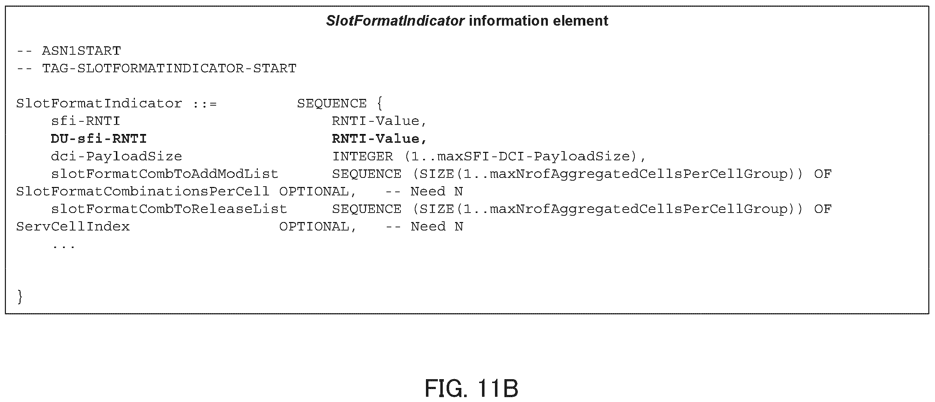

Different RNTIs are used in an MT and DU (see bold in FIGS. 11A and 11B). In this case, another configuration in slot format indication information (IE "SlotFormatIndicator") may be the same or different in an MT and DU.

### (Proposal 5-2)

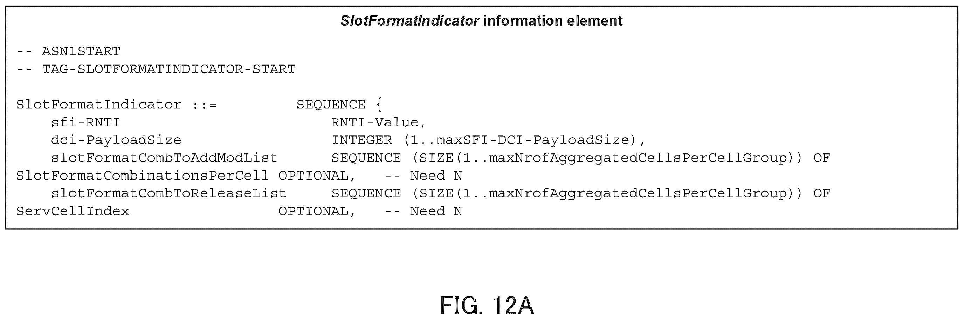

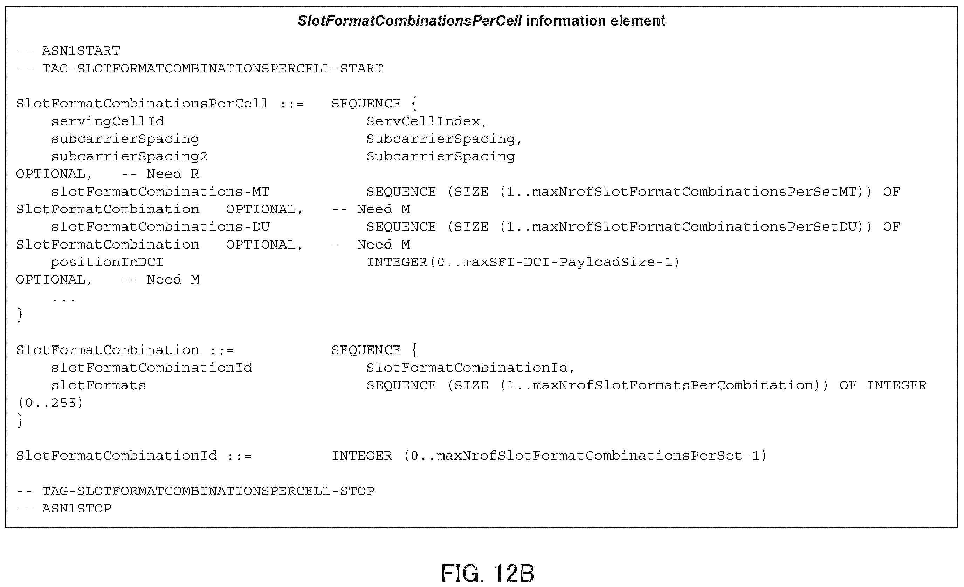

A shared RNTI is used in an MT and DU (see FIGS. 12A and 12B). In this case, different sets of parameters "slotFormatCombinationID" may then be used in MTs and DUs. For example, sets "1 to 5" of the parameter "slotFormatCombinationID" are used for the MT, and the respective IDs are associated with MT slot formats. Sets "6 to 10" of the parameter "slotFormatCombinationID" are used for the DU, and the respective IDs are associated with DU slot formats. The slot format may be the slot format described in Proposal 5 above or the slot format to be described in Proposal 6 below.

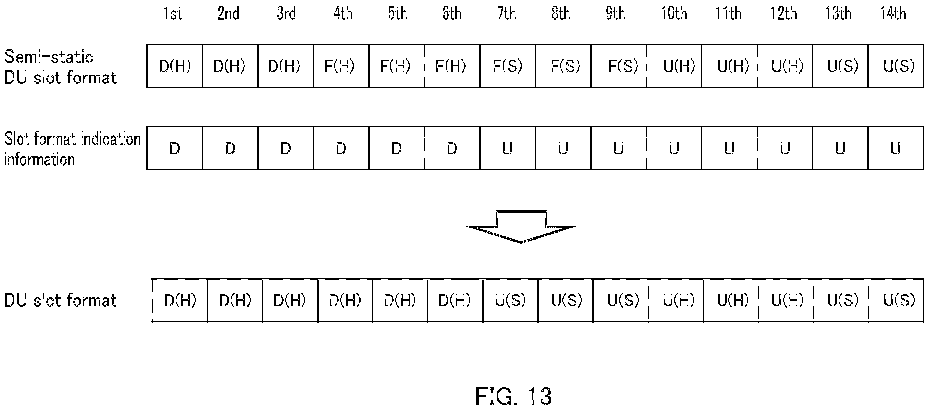

An exemplary indication of Case 2 will be described with reference to FIG. 13. First, the slot format of a DU is semi-statically configured. Next, slot format indication information of DCI format 2_0 is dynamically indicated. IAB node 10 applies the dynamically indicated slot format indication information to the semi-statically configured DU slot format and determines the link direction of a DU-F of the DU slot format. Note that the semi-statically configured Soft or Hard need not change according to the dynamic indication by DCI format 2_0.

### <Details of Option 2-1>

(Proposal 6-1) In Option 2-1, the indication of Case 1 and joint indications of Cases 2 and 3 are separated. For example, the indication of Case 1 is implemented using an existing mechanism (e.g., DCI format 2_0). The joint indications of Cases 2 and 3 are implemented using a method similar to Proposals 1 and 2 described above.

Next, the joint indications of Cases 2 and 3 will be described in detail. In this case, each slot format is configured by DU-D, DU-U, DU-F or DU-NA. Further, the resources for which DU-D, DU-U and DU-F are indicated become available.

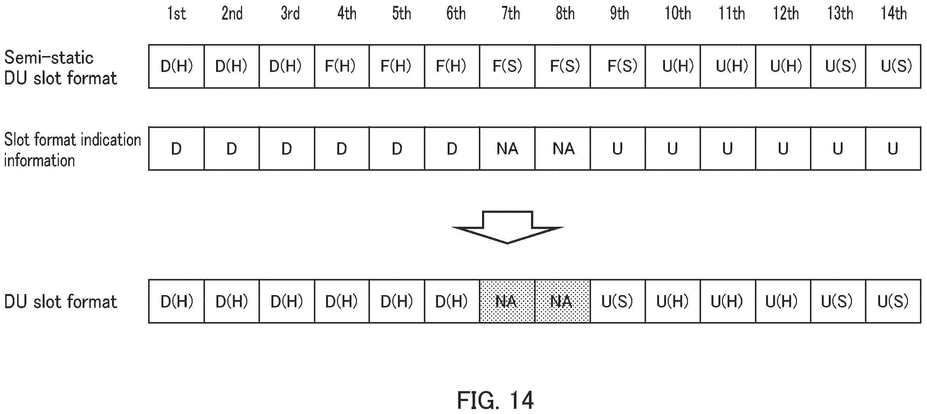

An exemplary joint indication of cases 2 and 3 mentioned above will be described with reference to FIG. 14. First, the DU slot format is semi-statically configured. Next, the slot format indication information of DCI format 2_0 is dynamically indicated. IAB node 10 applies the dynamically indicated slot format indication information to the semi-statically configured DU slot format and determines the link direction of the DU slot format or NA.

Note that the joint indications of Cases 2 and 3 may be implemented by at least one of Proposal 6-1-1, Proposal 6-1-2, and Proposal 6-1-3.

### (Proposal 6-1-1)

The joint indications of Cases 2 and 3 are implemented using the reserved entries of the existing slot format table and DCI format 2_0. Note that different RNTIs or different sets of parameters "slotFormatCombinationID" may be used to distinguish between DCIs of an MT and DU.

### (Proposal 6-1-2)

New format information (e.g., "slotFormats-R16") and DCI format 2_0 are used to implement the joint indications of Cases 2 and 3. The new format information may include a new slot format table or may include information (e.g., 2-bit information) for indicating a DU-D, DU-U, DU-F or DU-NA. Note that different RNTIs or different sets of parameters "slotFormatCombinationID" may be used to distinguish between DCIs of an MT and DU.

### (Proposal 6-1-3)

A new DCI-format is used to implement the joint indications of Cases 2 and 3. In this case, IAB node 10 may monitor DCI format 2_0 and the new DCI format.

### <Details of Option 2-2>

### (Proposal 6-2)

In Option 2-2, the indication of Case 2 and the joint indications of Cases 1 and 3 are separated. For example, in Case 2, an indication is made using DCI format 2_0. In Cases 1 and 3, a joint indication is made using the methods of Option 1 and/or 2 of Embodiment 1.

Note that, when DCI format 2_0 is used as in Proposal 1 or Proposal 2-1 in the joint indications of Cases 1 and 3, different RNTIs or different sets of parameters "slotFormatCombinationID" may be used to distinguish between the DCIs of the MT and DU. Further, when a new DCI format is used as in Proposal 2-2, IAB node 10 may monitor both DCI format 2_0, and the new DCI format.

The dynamic indication of Case 2 may be an option due to the following reason.
▪ The link direction of DU-F may be configured by semi-static configuration of a DUresource.
▪ How a DU-F is used can be determined by IAB node 10 because DU resources are for communication of a child link of IAB node 10. Note that the indication of how a DU-F is used is not limited to the indication from the parent IAB node.

Further, whether or not to monitor the dynamic indication of Case 2 by IAB node 10 may be configured by a higher layer. When the monitoring of the dynamic indication of Case 2 is configured, Proposal 7-2 described above is applied, and when the monitoring of the dynamic indication of Case 2 is not configured, any of the proposals in Embodiment 1 may be applied.

### <Details of Option 2-3>

### (Proposal 6-3)

In Option 2-3, the indication of Case 3 and joint indications of Cases 1 and 2 are separated.

For example, the indication of case 3 is implemented by applying Proposal 4 mentioned above. Signaling for the joint indications of Cases 1 and 2 may be common to the signaling for the joint indications of Cases 1, 2 and 3. Note that signaling for joint indications in Cases 1, 2, and 3 will be described hereinafter (see <Details of Option 3>).

### <Details of Option 3>

### (Proposal 7)

In Option 3, Cases 1, 2 and 3 are jointly indicated. A method similar to that of Proposals 1 and 2 described above may be applied to the joint indications of Cases 1, 2, and 3.

For example, each slot format is composed of six types including MT-D, MT-U, MT-F, DU-D, DU-U, and DU-F. The resources indicated as DU-D, DU-U, and DU-F are available for DUs, and a resource with a different indication is used in MTs.

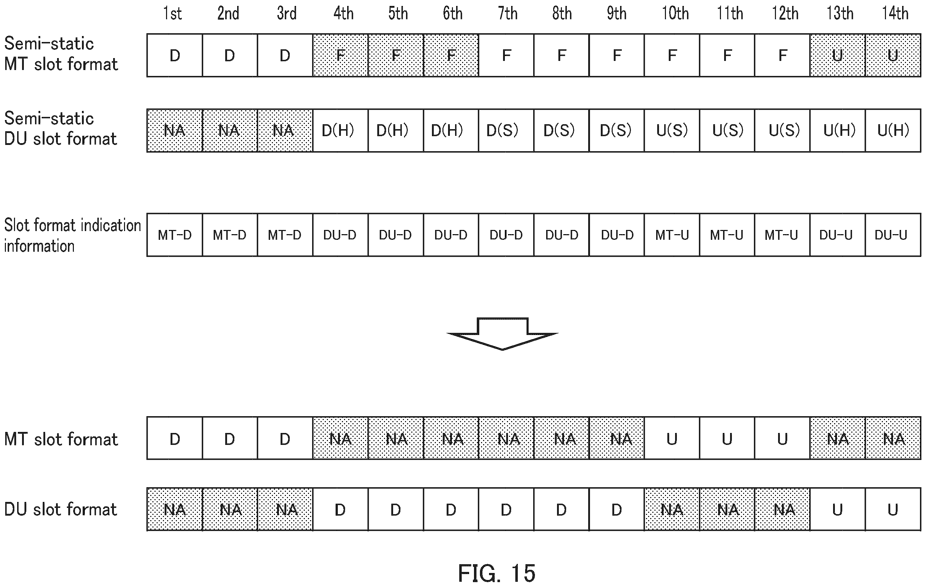

An exemplary joint indication of Cases 1, 2, and 3 mentioned above will be described with reference to FIG. 15. First, the MT slot format and the DU slot format are configured semi-statically. Next, the slot format indication information of DCI format 2_0 is dynamically indicated. IAB node 10 applies the dynamically indicated slot format indication information to the MT slot format and the DU slot format, and determines the link direction and availability of MT-F.

Note that the joint indications of Cases 1, 2, and 3 may be implemented by at least one of Option 3-1, Option 3-2, and Option 3-3.

### (Option 3-1)

Reserved entries in the slot format table and DCI format 2_0 are used.

### (Option 3-2)

The new information "slotFormats-R16" described in Proposal 2-1 and DCI format 2_0 are used. The new information "slotFormats-R16" may have a new slot format table or may have information (e.g., 3-bit information) for indicating any of MT-D, MT-U, MT-F, DU-D, DU-U, and DU-F.

### (Option 3-3)

The new DCI-format described in Proposal 2-2 above that contains information (e.g., 3-bit information) for indicating any of MT-D, MT-U, MT-F, DU-D, DU-U, and DU-F is used.

### <Summary of Embodiment 2>

In Embodiment 2, IAB node 10 includes: a reception section that receives configuration information including a configuration on an MT resource of a parent link and a DU resource of a child link, and indication information indicating an application of the resources; and control section 100 that controls a link direction of the MT resource, a link direction of the DU resource, and use of the DU resource based on the configuration information and the indication information.

With this configuration, IAB node 10 can appropriately control the MT resource and the DU resource.

### <Variations>

Next, a variation relating to Embodiment(s) 1 and/or 2 will be described.

### (Default Assumption)

In all the proposals above, the DU of IAB node 10 may assume that DU(S) is unavailable in a case where the availability is not dynamically indicated. In this case, the MT of IAB node 10 may assume that the MT resource corresponding to the DU(S) is available. Alternatively, the DU and MT of the IAB node may make an assumption opposite to the above. Alternatively, the default assumption of a DU(S) may be configured by a higher layer.

### (Alternatives)

When the indication of availability of DU(S) is separated from another indication, then Media Access Control-Control Element (MAC-CE) or DCI may be used to activate and/or deactivate the DU(S). The other indication may be, for example, an indication of the resource direction of an MT or DU based on the DCI.

For example, when a DU(S) is indicated as not available (NA) by a MAC-CE or DCI, the DU(S) may be unavailable until the timer expires. In this case, the timer may start or be reset at timing of the DL or UL scheduling in the DU(S) from parent IAB node 10A. When there is no scheduling grant in the DU(S) for a predetermined period of time, the timer may expire. The DU(S) may then be available until the next indication by MAC-CE or DCI. Note that, in this example, the default state of DU(S) may be available in the DU.

### <Hardware Configuration and/or the like>

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit (transmission section)" or "transmitter." The methods for implementing the functions are not limited specifically as described above.

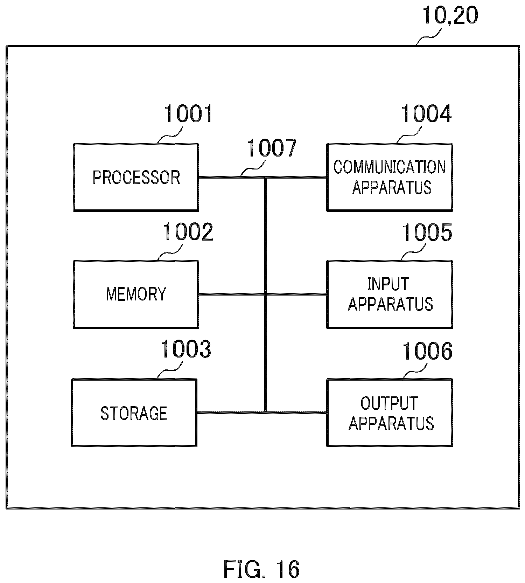

For example, the base station, user equipment, and the like according to an embodiment of the present disclosure may function as a computer that executes processing of a wireless communication method of the present disclosure. FIG. 16 illustrates one example of a hardware configuration of an IAB node and UE according to one embodiment of the present disclosure. IAB node 10 and UE 20 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of IAB node 10 and of UE 20 may include one apparatus or a plurality of apparatuses illustrated in the drawings or may not include part of the apparatuses.

The functions of IAB node 10 and UE 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 100, MT 102, DU 103, and the like described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, a control section of UE 20 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the wireless communication method according to one embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

The communication device 1004 is hardware (transmission/reception device) for performing communication between computers via at least one of a wired network and a wireless network, and is also referred to as, for example, a network device, a network controller, a network card, a communication module, and the like. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, antennas and the like of IAB node 10 and UE 20 may be realized by communication apparatus 1004. A transmission/reception section may be implemented with a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, IAB node 10 and UE 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB)), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), or other appropriate systems and a nextgeneration system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information or the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "wireless base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, user equipment 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the user equipment in the present disclosure may be replaced with the base station. In this case, base station 10 is configured to have the functions that user equipment 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <Means>

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that are used in each user equipment) on the basis of TTI to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful for wireless communication systems.

### Reference Signs List

- 10, 10A, 10B, 10C IAB: nodes
- 20: UE
- 100: Control section
- 102: MT
- 103: DU

## Claims

1. A wireless node, comprising:
a reception section that receives configuration information including a configuration on a resource of a first radio period and a resource of a second radio period, and indication information indicating an application of the resources; and
a control section that controls a link direction of the resource of the first radio period and use of the resource of the second radio period, based on the configuration information and the indication information.

2. The wireless node according to claim 1, wherein the indication information includes an indication on the link direction of the resource of the first radio period and the use of the resource of the second radio period.

3. The wireless node according to claim 2, wherein the indication information includes an indication on the resources in slot units.

4. The wireless node according to claim 2, wherein the indication information includes an indication on the resources in symbol units.

5. The wireless node according to claim 1, wherein
first indication information on the link direction of the resource of the first radio period, and
second indication information on the link direction of the resource of the second radio period.

6. A radio communication control method, comprising:
receiving, by a wireless node, configuration information including a configuration on a resource of a first radio period and a resource of a second radio period, and indication information indicating an application of the resources; and
controlling, by the wireless node, a link direction of the resource of the first radio period and use of the resource of the second radio period, based on the configuration information and the indication information..
